# EUROPEAN PATENT SPECIFICATION

(11) **EP 1 474 839 B1**
(45) Date of publication and mention of the grant of the patent: **07.04.2010**
(21) Application number: 03707808.6
(22) Date of filing: 06.02.2003
(51) Int. Cl.: H01M 8/02

(54) **POLYMER ELECTROLYTE MEMBRANES FOR USE IN FUEL CELLS**
POLYMERELEKTROLYTMEMBRANEN ZUR VERWENDUNG IN BRENNSTOFFZELLEN
MEMBRANES ELECTROLYTIQUES POLYMERES DESTINEES A ETRE UTILISEES DANS DES CELLULES ELECTROCHIMIQUES

(30) Priority: 06.02.2002 US 354717 P
(43) Date of publication of application: 10.11.2004
(73) Proprietor: BATTELLE MEMORIAL INSTITUTE, Columbus, OH 43201-2693 (US)
(72) Inventor: VIJAYENDRAN, Bhima, Dublin, OH 43017 (US); MCGINNISS, Vincent, D., Sunbury, OH 43074 (US); RISSER, Steven, M., Reynoldsburg, OH 43068 (US); SCHULTE, Michael, D., Columbus, OH 43230 (US); SAYRE, Jay, R., Columbus, OH 43230 (US); CAFMEYER, Jeffrey, T., Columbus, OH 43212 (US)
(74) Representative: Giles, Ashley Simon
(86) International application number: PCT/US2003/003862
(87) International publication number: WO 2003/067691

(56) References cited:
- EP-A- 1 110 992
- EP-A- 1 110 992
- EP-A- 1 113 517
- WO-A-00/49069
- WO-A-00/49069
- WO-A-01/64322
- WO-A-02/05370
- WO-A-98/42037
- WO-A-99/54407
- WO-A-02/087001
- DE-A1- 1 910 480
- US-A- 5 429 759
- US-A- 5 599 638
- US-A- 5 599 638
- US-A- 5 795 496
- US-A- 5 817 718
- US-A- 5 817 718
- US-A- 6 059 943
- US-B1- 6 268 430
- US-B1- 6 268 430
- J.J. YEAGER, A. EISENBERG: "Perflourinated Ionomer Membranes" PERFLOURINATED IONOMER MEMBRANES, no. 180, 1982, pages 1-6-41-63, XP008016836
- SWEE CHYE YEO, A. EISENBERG: "Physical Properties and Supermolecular Structure of Perflourinated Ion-Containing (Nafion) Polymers" JOURNAL OF APPLIED POLYMER SCIENCE, vol. 21, no. 4, 1977, pages 875-898, XP001148971
- J.J. YEAGER, A. EISENBERG: "Perflourinated Ionomer Membranes" PERFLOURINATED IONOMER MEMBRANES, no. 180, 1982, pages 1-6-41-63, XP008016836
- SWEE CHYE YEO, A. EISENBERG: "Physical Properties and Supermolecular Structure of Perflourinated Ion-Containing (Nafion) Polymers" JOURNAL OF APPLIED POLYMER SCIENCE, vol. 21, no. 4, 1977, pages 875-898, XP001148971

## Description

### CROSS-REFERENCE TO RELATED APPLICATION

This application claims the benefit of U.S. provisional application serial number 60/354,717, filed February 6, 2002.

### TECHNICAL FIELD

This invention relates in general to fuel cells, and in particular to improved polymer electrolyte membranes for use in fuel cells.

### BACKGROUND OF THE INVENTION

Fuel cells are a promising technology for generating electricity and heat with higher efficiency and lower emissions than current methods. Polymer electrolyte membrane ("PEM") fuel cells include a polymer membrane sandwiched between an anode and a cathode. A fuel such as hydrogen or methanol is flowed into contact with the anode. The fuel give up electrons at the anode, leaving positively charged protons. On the opposite side of the cell, the cathode adsorbs oxygen from the air, generating a potential that pulls the electrons through an external circuit to give them to the adsorbed oxygen. When an adsorbed oxygen receives two electrons it forms a negatively charged oxygen anion. The polymer electrolyte membrane allows the protons to diffuse through the membrane while blocking the flow of the other materials. When two protons encounter an oxygen anion they join together to form water.

While there has been substantial progress in fuel cells, the barriers that remain for commercialization are significant. In particular, the cost of fuel cells remains high. Presently, the only commercially available polymer electrolyte membranes are fluorinated polymer membranes sold under the tradename Nafion™ by Dupont, which are sold at a relatively high cost. The fluorinated polymer membranes also have other drawbacks, such as poor durability at high temperatures, susceptibility to contamination by carbon monoxide at normal operating temperatures of 80°C, methanol crossover in a direct methanol fuel cell, and poor water management characteristics (high electroosmotic drag due to inherent hydration requirements).

U.S. Patent No. 5,525,436 by Savinell et al. discloses an alternative polymer electrolyte membrane comprising a basic polymer complexed with a strong acid, or comprising an acidic polymer such as a polymer containing sulfonate groups. There is still a need for other polymer electrolyte membrane materials that can be used as improved alternatives to the conventional fluorinated polymer membranes.

### SUMMARY OF THE INVENTION

The problem of the invention is solved according to independent claim 1.

This invention relates to a polymer electrolyte membrane comprising a proton conducting hydrocarbon-based polymer membrane, the polymer having a backbone and having acidic groups on side chains attached to the backbone.

The invention also relates to a membrane electrode assembly comprising: a polymer electrolyte membrane comprising a proton conducting hydrocarbon-based polymer membrane, the polymer having a backbone and having acidic groups on side chains attached to the backbone; a first catalyst layer positioned on a first side of the membrane; a second catalyst layer positioned on a second side of the membrane; an anode positioned outside the first catalyst layer; and a cathode positioned outside the second catalyst layer.

The invention also relates to a polymer electrolyte membrane comprising a proton conducting hydrocarbon-based polymer membrane having a phase separated morphological microstructure.

The invention also relates to a polymer electrolyte membrane comprising a proton conducting polymer membrane having a phase separated morphological microstructure, where the polymer has a glass transition temperature of at least about 100°C.

The invention also relates to a polymer electrolyte membrane comprising a proton conducting membrane, the membrane comprising a basic material in combination with an acidic material selected from acidic hydrocarbon-based polymers, acidic hydrocarbon-based oligomers, and blends thereof.

The invention also relates to a membrane electrode assembly comprising: a polymer electrolyte membrane comprising a proton conducting membrane, the membrane comprising a basic material in combination with an acidic material selected from acidic hydrocarbon-based polymers, acidic hydrocarbon-based oligomers, and blends thereof; a first catalyst layer positioned on a first side of the membrane; a second catalyst layer positioned on a second side of the membrane; an anode positioned outside the first catalyst layer; and a cathode positioned outside the second catalyst layer.

The invention also relates to a polymer electrolyte membrane comprising a proton conducting membrane, the membrane produced from a solid hydrocarbon-based polymer in combination with a gel hydrocarbon-based polymer, the solid and gel polymers having acidic groups.

The invention also relates to a polymer electrolyte membrane comprising a proton conducting membrane, the membrane comprising an epoxy-containing polymer in combination with a nitrogen-containing compound.

The invention also relates to a polymer electrolyte membrane comprising a proton conducting polymer membrane having a phase separated morphological microstructure, the membrane having a lower electroosmotic drag coefficient than a Nafion™ membrane of similar dimensions at the same ionic conductivity and the same temperature.

The invention also relates to a polymer electrolyte membrane comprising a proton conducting hydrocarbon-based polymer membrane which does not lose more than about 5% of its maximum ionic conductivity when operated in a fuel cell at a temperature of 100°C, and which does not lose more than about 25% of its maximum ionic conductivity when operated in a fuel cell at a temperature of 120°C.

The invention also relates to a direct methanol fuel cell comprising a polymer electrolyte membrane sandwiched between an anode and a cathode, and a supply of methanol fuel fed to the anode, where the polymer electrolyte membrane comprises a proton conducting hydrocarbon-based polymer membrane, the polymer having a backbone and having acidic groups on side chains attached to the backbone.

The invention also relates to a direct methanol fuel cell comprising a polymer electrolyte membrane sandwiched between an anode and a cathode, and a supply of methanol fuel fed to the anode, where the polymer electrolyte membrane comprises a proton conducting membrane, the membrane comprising a basic material in combination with an acidic material selected from acidic hydrocarbon-based polymers, acidic hydrocarbon-based oligomers, and blends thereof.

The invention also relates to a direct methanol fuel cell comprising a polymer electrolyte membrane sandwiched between an anode and a cathode, and a supply of methanol fuel fed to the anode, where the polymer electrolyte membrane comprises a proton conducting polymer membrane having a glass transition temperature of at least about 100°C.

The invention also relates to a method of making a polymer electrolyte membrane comprising: producing a hydrocarbon-based polymer having a backbone and having acidic groups on side chains attached to the backbone; and forming the polymer into a proton conducting membrane adapted for use as a polymer electrolyte membrane.

The invention also relates to a method of making a polymer electrolyte membrane comprising: producing a composite polymer comprising a solid hydrocarbon-based polymer in combination with a gel hydrocarbon-based polymer, the solid and gel polymers having acidic groups; and forming the composite polymer into a proton conducting membrane adapted for use as a polymer electrolyte membrane.

The invention further relates to a polymer electrolyte membrane comprising a proton conducting membrane, the membrane comprising a blend of different hydrocarbon-based polymers or a blend of a hydrocarbon-based polymer and a Nafion™ polymer.

Various advantages of this invention will become apparent to those skilled in the art from the following detailed description of the preferred embodiments, when read in light of the accompanying drawings.

### BRIEF DESCRIPTION OF THE DRAWINGS

Figure 1 is a representation of a two-phase morphological structure in a sulfonated side chain polymer of the present invention.
Figure 2 is a representation of a random distribution of sulfonate groups in a sulfonated hydrocarbon-based polymer of the prior art.
Figures 3-12 are ionic conductivity plots of polymer electrolyte membranes made from hydrocarbon-based polymers, in comparison with a conductivity plot of a Nafion™ membrane.
Figure 13 shows ionic conductivity plots of two polymer electrolyte membranes according to the invention, in comparison with a conductivity plot of a Nafion™ membrane.

### DETAILED DESCRIPTION OF PREFERRED EMBODIMENTS OF THE INVENTION

The present invention relates to improved polymer electrolyte membranes. The membranes are made from hydrocarbon-based polymers instead of the conventional fluorinated polymers. The membranes are reduced in cost, can operate at higher temperatures, and have reduced water management and carbon monoxide issues compared to membranes made with the fluorinated polymers operating at less than 100°C.

### Membranes Made with Hydrocarbon-Based Polymers Having Acidic Groups on Side Chains

In one embodiment of the invention, the polymer electrolyte membrane is made from a hydrocarbon-based polymer having acidic groups on side chains of the polymer. By "hydrocarbon-based" is meant that the polymer consists predominantly of carbon and hydrogen atoms along its backbone, although other atoms can also be present. The acidic groups are not attached directly to the backbone of the polymer, but rather are attached to side chains that extend from the backbone. Preferably, the acidic groups are attached to atoms on the side chains that are between 1 and 12 atoms away from the backbone, and more preferably between 4 and 10 atoms away from the backbone. By "attached to the side chains" is meant that at least about 65% by weight of the acidic groups are attached to the side chains, preferably at least about 75%, more preferably at least about 85%, and most preferably substantially all the acidic groups are attached to the side chains.

Any suitable acidic groups can be used for making the polymers, such as sulfonate groups, carboxylic acid groups, phosphonic acid groups, or boronic acid groups. Mixtures of different acidic groups can also be used. Preferably, the acidic groups are sulfonate groups.

Any suitable hydrocarbon-based polymer can be used in the invention. Preferably, the polymer has a weight average molecular weight of at least about 20,000. The polymer is usually stable at temperatures in excess of 100°C. Preferably, the polymer has a glass transition temperature of at least about 100°C, and more preferably at least about 120°C. In some embodiments, the polymer is selected from sulfonated polyether ether ketones (PEEK), sulfonated polyether sulfones (PES), sulfonated polyphenylene oxides (PPO), sulfonated lignosulfonate resins, or blends thereof. These categories of polymers include substituted polymers; for example, sulfonated methyl PEEK can be used as well as sulfonated PEEK.

The polymers can be prepared either by adding acidic groups to the polymers, or by adding acidic groups to monomers or other subunits of the polymers and then polymerizing the subunits. Following is a representative method of preparing a sulfonated side chain methyl PEEK by first preparing the polymer and then sulfonating the polymer. First, methyl PEEK is prepared as follows (this is described in U.S. Patent No. 5,288,834):

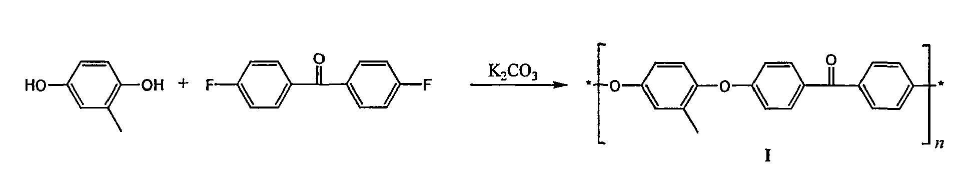

Then, methyl side chains of the methyl PEEK are first brominated and then sulfonated as follows (the synthesis of II is described in U.S. 5,288,834):

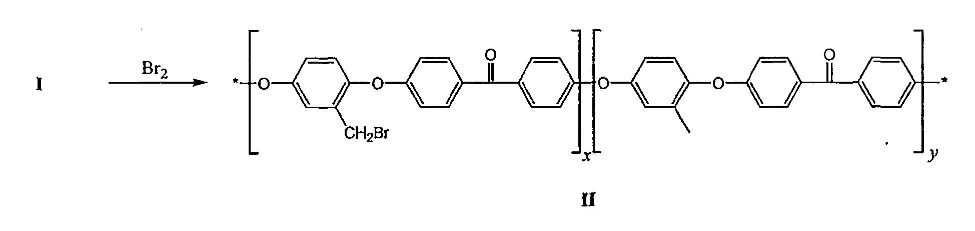

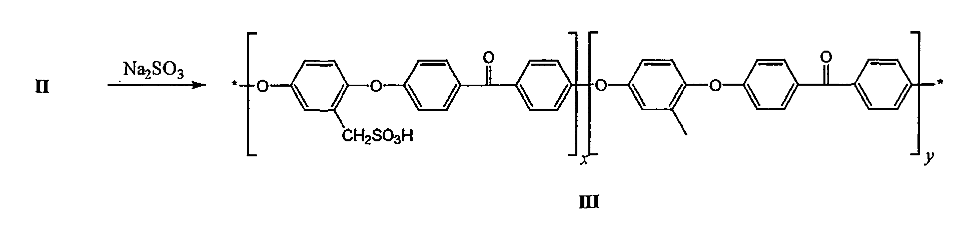

Any suitable sulfonation reaction procedure can be used to synthesize III from II. In one representative procedure, 0.50g of monobromomethyl PEEK (II) was dissolved in 10ml of N-methylpyrrolidinone with 0.30g of sodium sulfite. The solution was heated at 70°C for 16 hours. After allowing to cool to room temperature, the polymer solution was poured into 50ml of water. The precipitate was collected on a membrane filter and washed with water and dried at 70°C for 16 hours under vacuum. The yield was 0.46g (98%).

Following is a representative method of first preparing sulfonated side chain monomers and then polymerizing the monomers to make a sulfonated side chain PEEK homopolymer. The length of the aliphatic chain is controlled by the use of different α,ω-dibromoalkanes (e.g. 1,4-dibromobutane, 1,6-dibromohexane, 1,12-dibromododecane, etc.) during the first synthetic step.

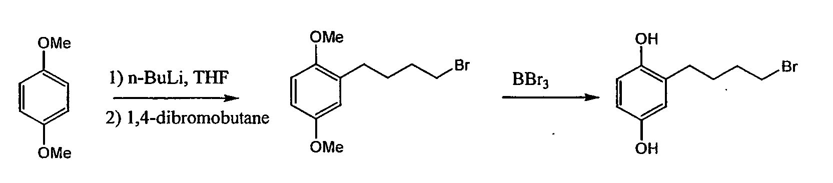

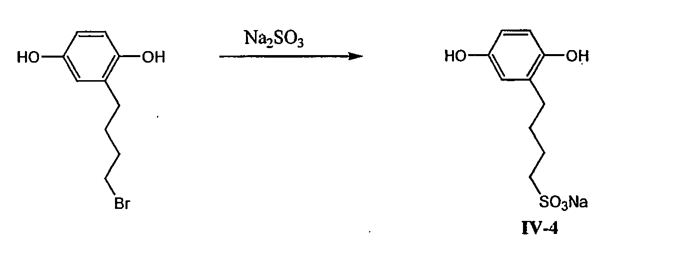

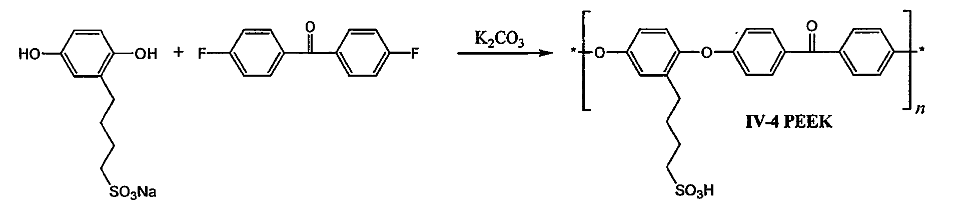

Any suitable reaction procedure can be used to synthesize IV-4. In one representative procedure, 1.01 g of 2-(4-bromobutyl)-1,4-dihydroxybenzene was dissolved in 10ml of N,N-dimethylformamide with 1.00g of sodium sulfite and stirred at room temperature for 1 hour. The reaction mixture was then precipitated into 50ml of water and extracted with diethyl ether (3x50ml). The extracts were washed with water (3x25ml), dried over magnesium sulfate and the solvent removed under vacuum.

Following is a representative method of preparing a sulfonated side chain PEEK copolymer. The amount of sulfonate in the final polymer can be controlled by forming copolymers with hydroquinone (and also methyl hydroquinone from the synthesis of I).

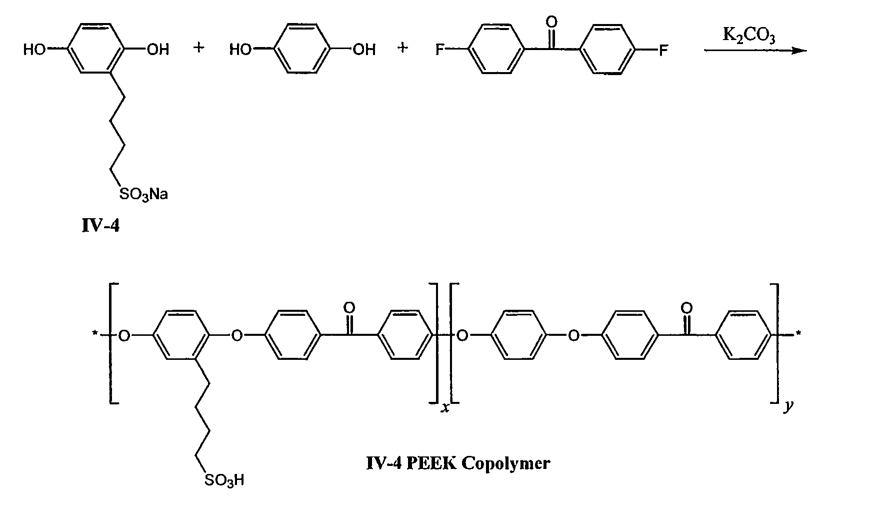

The following sulfonated side chain monomers may be prepared according the synthesis outlined above for IV-4 by utilizing different starting materials. In some preferred embodiments of the invention, the side chains are aliphatic hydrocarbon chains, such as those shown below. The monomers can then be polymerized into sulfonated side chain polymers as described above.

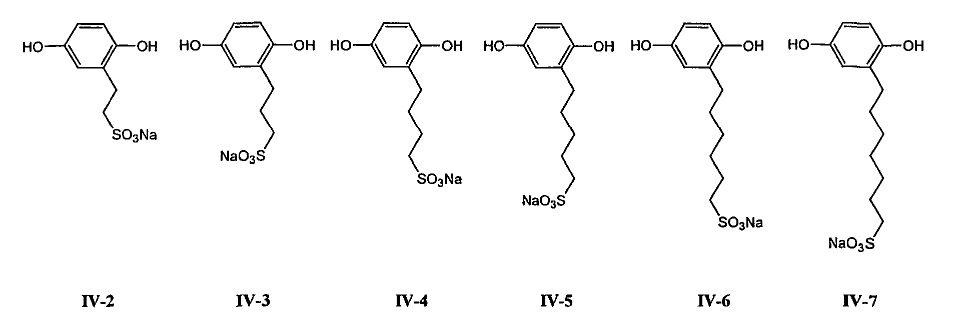

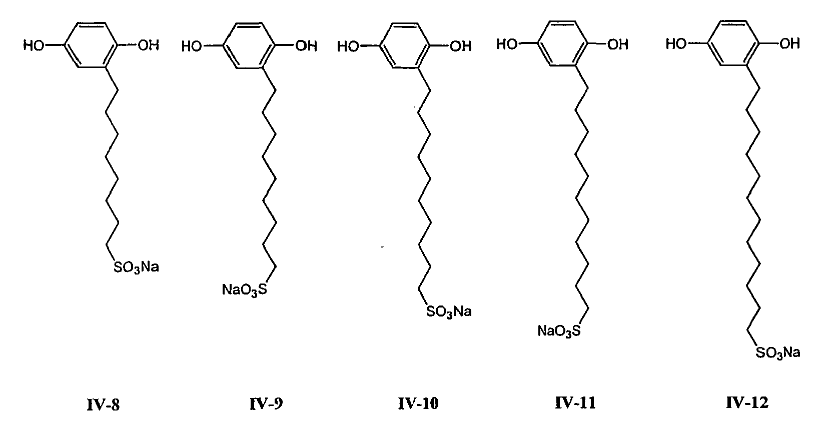

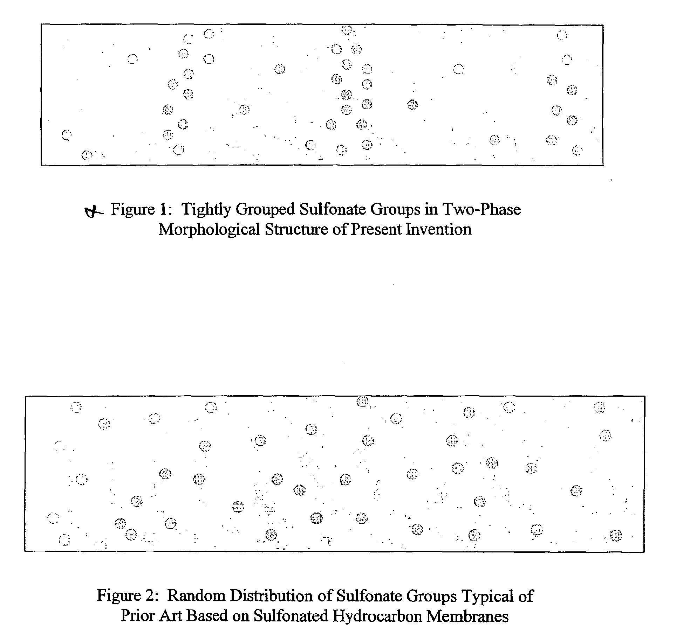

While not intending to be limited by theory, it is believed that the hydrocarbon-based polymers having acidic groups on side chains usually have a phase separated morphological microstructure that increases their proton conductivity (measured as ionic conductivity). The polymers have different concentrations of groups in different areas of the membrane, not a uniform mixture all the way through the polymer. It is believed that the length of the side chains is sufficient to allow for phase separation of the acidic groups, with these groups forming small channels in the bulk of the polymer. The proton conduction is believed to take place primarily inside these channels. Figure 1 is a representation of the phase separated morphology of the sulfonated side chain polymers, with the sulfonate groups shown as dots and the remainder of the polymer shown as a gray background. It is seen that the sulfonate groups are tightly grouped together, leaving channels between the groups that leads to an enhancement of the proton conductivity. In contrast, Figure 2 is a representation of a typical sulfonated hydrocarbon-based polymer in which the sulfonate groups are attached to the backbone instead of to side chains on the polymer. It is seen that the sulfonate groups are relatively uniformly distributed throughout the polymer, so that channels are not formed between the groups as in Figure 1. The lack of a phase separated morphological microstructure results in lower proton conductivity.

More generally, the present invention relates to any polymer electrolyte membrane comprising a proton conducting hydrocarbon-based polymer membrane having a phase separated morphological microstructure. Preferably, the phase separated morphology is provided by the polymer having a backbone and having acidic groups on side chains attached to the backbone. In addition to sulfonate groups, any other suitable acidic groups can be attached to the polymer side chains, such as those described above.

The invention also relates in general to any polymer electrolyte membrane comprising a proton conducting polymer membrane having a phase separated morphological microstructure, where the polymer has a glass transition temperature of at least about 100°C, and preferably at least about 120°C. Any polymer having these properties can be used in the invention. Some nonlimiting examples of polymers that can be suitable are sulfonated aromatic or alicyclic polymers, and sulfonated organic or inorganic hybrids such as sulfonated siloxane-containing hybrids and sulfonated hybrids containing Siloxirane® (pentaglycidalether of cyclosilicon, sold by Advanced Polymer Coatings, Avon, Ohio). The polymer membranes of the invention can operate at higher temperatures than conventional fluorinated polymer membranes.

The high temperature operating ability of the polymer electrolyte membranes helps them to retain most of their ionic conductivity at high temperatures. This is in contrast with Nafion™ membranes, which have significantly reduced ionic conductivity at high temperatures. Preferably, a membrane according to the invention does not lose more than about 5% of its maximum ionic conductivity when operated in a fuel cell at a temperature of 100°C, and does not lose more than about 25% of its maximum ionic conductivity when operated in a fuel cell at a temperature of 120°C

While the phase separated morphology of the polymer electrolyte membrane increases its ionic conductivity, the morphology does not cause an undesirable electroosmotic drag in the membrane. In a Nafion™ membrane, the protonic current through the membrane produces an electroosmotic water current in the same direction that leads to a depletion of water at the anode. This results in an increased membrane resistance, i.e., a reduced fuel cell performance. The electroosmotic drag coefficient, K_{drag}, is defined as the number of water molecules transferred through the membrane per proton in the case of a vanishing gradient in the chemical potential of H₂O, and it can be measured by an electrophoretic NMR as described in the article "Electroosmotic Drag in Polymer Electrolyte Membranes; an Electrophoretic NMR Study" by M. Ise et al., Solid State Ionics 125, pp. 213-223 (1999). At the same ionic conductivity and the same temperature, the polymer electrolyte membranes of the invention usually have a lower electroosmotic drag coefficient than a Nafion™ membrane.

The polymer electrolyte membrane can optionally contain one or more additives that aid in controlling the morphology of the membrane for increased proton conductivity. Any suitable additives can be used for this purpose. Some nonlimiting examples of additives that can be suitable include interpenetrating polymer networks and designed polymer blends. Some typical polymer blend compositions to effect a desired morphology are phenolics and polyimides. These polymers can be slightly or fully sulfonated and used in combination with the hydrocarbon-based polymers mentioned above at low to medium levels (preferably from about 10% to about 30% of total polymer composition). One example of a phenolic resin is a lignin derived phenolic having good high temperature properties.

The polymer electrolyte membrane can also optionally contain one or more additives that improve the membrane by increasing its hydratability and/or increasing its ionic conductivity. Any suitable additives can be used for this purpose. Some nonlimiting examples of additives that can be suitable include highly hydrated salts and heteroatom polyacids that retain their water of hydration at high temperature and promote high electron conductivity at high temperature. Examples of suitable additives include imidazole, substituted imidazoles, lignosulfonate, cesium hydrosulfate, zirconium oxy salts, tungsto silisic acid, phosphotungstic acid, and tungsten-based or molybdenum-based heteroatom polyacids such as polytungstic acid.

### Membranes Made from Acidic and Basic Materials

In another embodiment of the invention, the polymer electrolyte membrane is made from an acidic hydrocarbon-based polymer or oligomer, or blends thereof, in combination with a basic material. The acid/base interaction is primarily responsible for the proton conduction in such membranes, particularly at high temperatures. The membranes do not depend on water for proton conduction; as a result, the membranes have reduced water management issues.

Any suitable acidic polymer or oligomer can be used to make the membrane. Preferably, the acidic polymer is a sulfonated hydrocarbon-based polymer, although other acidic polymers can be used, such as carboxylated, phosphonated, or boronic acid-containing polymers. In some embodiments, the polymer is selected from sulfonated polyether ether ketones, sulfonated polyether sulfones, sulfonated polyphenylene oxides, sulfonated lignosulfonate resins, or blends thereof. The acidic groups can be added on either the backbone or side chains of the polymer in this embodiment of the invention.

Any suitable basic material can be used to make the membrane. Preferably, the basic material is a non-polymeric material. In some embodiments, the basic material is a heterocyclic compound such as imidazole, pyrazole, triazole or benzoimidazole. Other basic materials could also be used, such as substituted imidazoles (e.g., short chain polyethyleneoxide terminated imidazole groups), pyrrolidones, oxazoles, or other basic amine compounds. Preferably, the basic material is present in an amount of not more than about 30% by weight of the polymer.

The polymer electrolyte membrane can optionally contain one or more additives to further enhance its ionic conductivity, such as the additives described above.

Table 1 lists some membrane formulations, with "Base System" referring to an acidic hydrocarbon-based polymer or polymer blend. "SPEEK" refers to sulfonated polyether ether ketone having sulfonate groups attached to the aromatic groups of the polymer backbone. The SPEEK was synthesized in a 36-hour, room temperature sulfonation reaction. "SPES" refers to sulfonated polyether sulfone having sulfonate groups attached to the aromatic groups of the polymer backbone. The SPES was synthesized in a 24-hour, room temperature sulfonation reaction. "SPEEK/SPES" refers to a 50/50 blend by weight of SPEEK and SPES. Some of the formulations contain the additives PWA (phosphotungstic acid), imidazole, and a polymer gel (which is discussed below).

**Table 1 Material Formulation Matrix**

| Sample | Base System | PWA | Gel | Imidazole |
|---|---|---|---|---|
| | | (wt% wrt base) | (wt% wrt basle) | (wt% wrt base) |
| 1 | SPEEK | | | |
| 2 | SPEEK | 10 | | |
| 3 | SPEEK | | 10 | |
| 4 | SPEEK | | | 7.5 |
| 5 | SPEEK | 10 | 10 | |
| 6 | SPEEK | 10 | | 7.5 |
| 7 | SPEEK | | 10 | 7.5 |
| 8 | SPES | | | |
| 9 | SPEEK/SPES | | | |
| 10 | SPEEK/SPES | 10 | | |

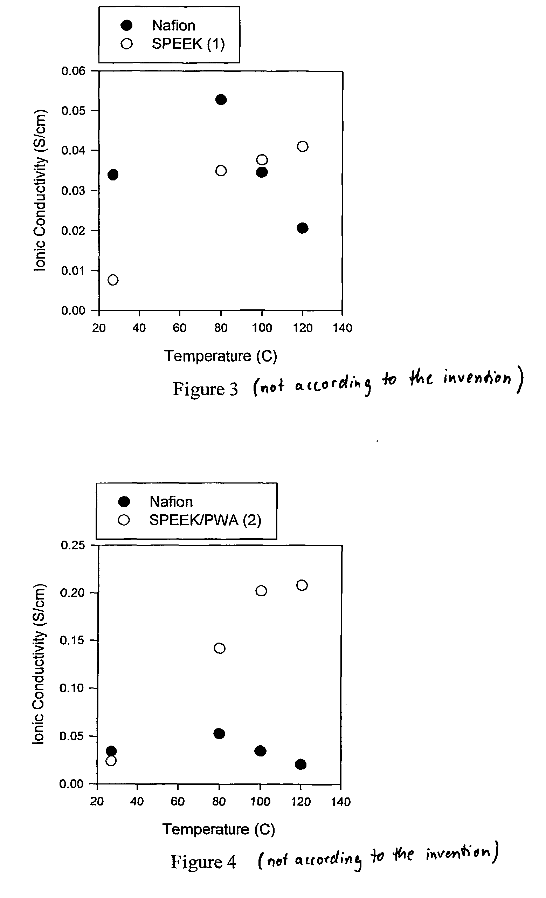

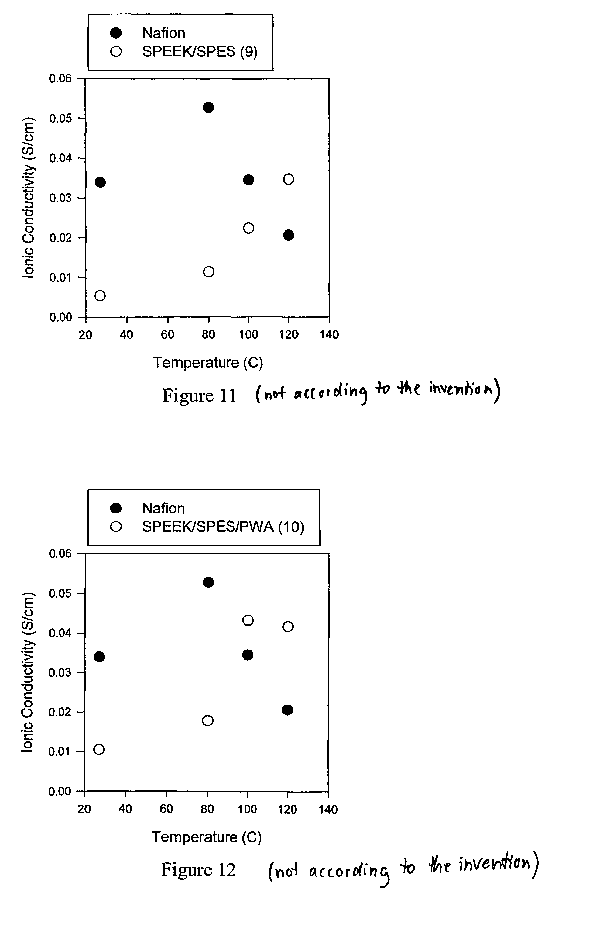

The ionic conductivity plots corresponding to samples 1-10 in the table are shown in Figures 3-12, respectively. The conductivity plots of the sample membranes are shown in comparison with a conductivity plot of a Nafion™ membrane. These plots display ionic conductivity (S/cm) versus temperature (°C) in a saturated environment. For 8 of the 10 material systems, there is a marked improvement over Nafion™ at 120°C. Of the two remaining material systems, there is a stable trend in ionic conductivity which is independent of temperature that is similar to the performance of Nafion™ at 120°C.

In another embodiment of the invention, the polymer electrolyte membrane is made from a blend of different polymers, in combination with one or more additives that aid in controlling the morphology of the membrane for increased proton conductivity, or in combination with one or more additives that improve the membrane by increasing its hydratability and/or increasing its ionic conductivity. Such additives are described above. Any suitable polymers can be used in the blends. Preferably, the blends are a blend of different hydrocarbon-based polymers, or a blend of a hydrocarbon-based polymer and a Nafion™ polymer.

### Membranes Made from Solid Polymer in Combination with Gel Polymer

In another embodiment of the invention, the polymer electrolyte membrane is made from a solid hydrocarbon-based polymer in combination with a gel hydrocarbon-based polymer, the solid and gel polymers having acidic groups such as described above. The membranes made with the blend of solid and gel polymers are usually low cost and typically outperform Nafion™ membranes at high temperatures (e.g., above about 100°C). In some embodiments, the solid polymer and the gel polymer are both selected from sulfonated polyether ether ketones, sulfonated polyether sulfones, sulfonated polyphenylene oxides, sulfonated lignosulfonate resins, or blends thereof. Preferably, the amount of gel polymer is from about 1% to about 30% by weight of the solid polymer.

Any suitable methods can be used for preparing the solid and gel polymers, and for preparing the membranes from the polymer blends. With respect to PEEK, the PEEK powder is typically placed in a reaction vessel with sulfuric acid for times less than or equal to 18 hours and greater than or equal to 36 hours at room temperature. 18-hour sulfonations produce systems which are inherently stable in water, while the 36-hour sulfonations eventually become water soluble. There are two methods which promote water-soluble gel formation in the 36-hour systems. One approach is to improperly wash the system from free acid. This will produce a sulfonated PEEK/water slurry which is acidic (pH about 3-4). This slurry is then left on a lab bench at room temperature for days (20-30) until water solubility is apparent. A second approach is to accelerate gel formation by using an autoclave. Using this method, a 36-hour batch is washed to acidic pH similarly to the first method, but the remaining slurry is placed in the autoclave at 150°C, 15 psi, for 3 hours. This method will also produce a water-soluble gel. The gels can then be blended with the 18-hour sulfonated powders, which have been thoroughly washed of free acid. Regardless of the method used, a film can be drawn down with an application bar and applied to a substrate which provides for a free-standing film. Once a film is created from the 18-hour sulfonated PEEK and the 36-hour gels, the material is no longer water soluble.

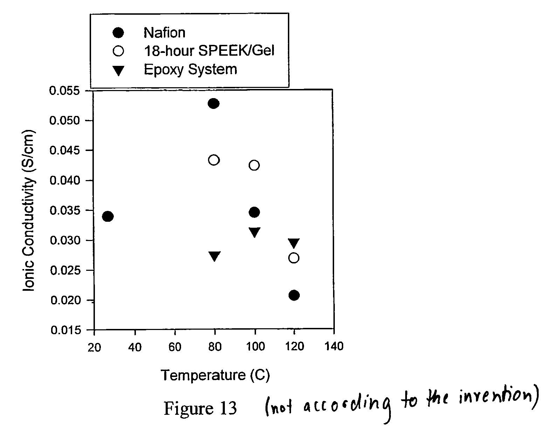

Figure 13 shows an ionic conductivity plot of a polymer electrolyte membrane made from a blend of solid SPEEK and 10% gel SPEEK (by weight of the solid). This figure displays ionic conductivity (S/cm) versus temperature (°C) in a saturated environment as compared to Nafion™. It is seen from this figure that the ionic conductivity of the 18-hour SPEEK/Gel membrane outperforms Nafion™ at 100°C and 120°C.

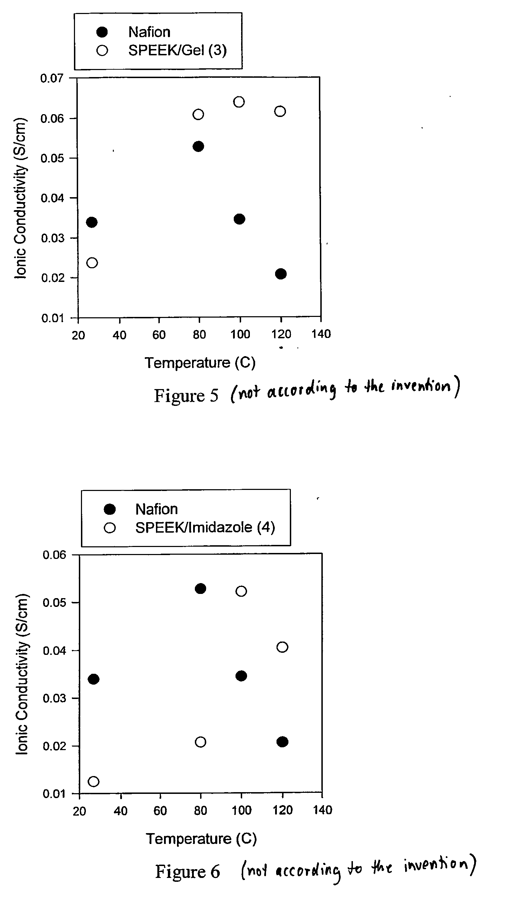

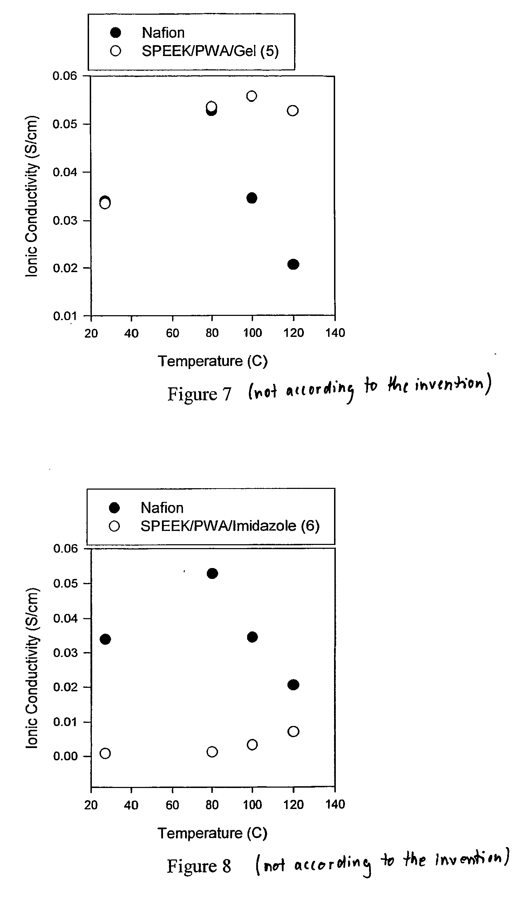

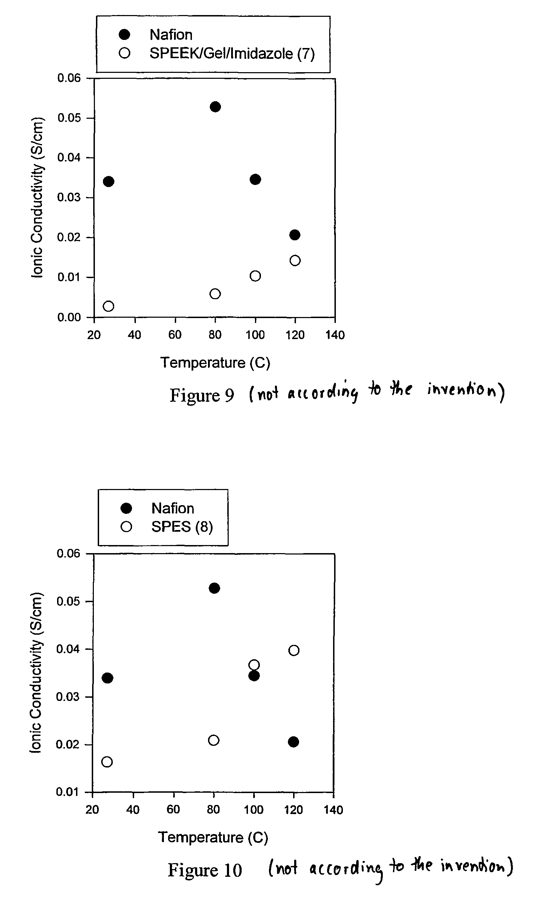

Samples 3, 5 and 7 in Table 1 were made from a blend of a solid SPEEK and a gel SPEEK. The gel SPEEK was prepared by sulfonating PEEK to a higher degree of sulfonation than the solid SPEEK, which promotes the onset of gel formation (i.e. water solubility). As seen in the corresponding conductivity plots in Figures 5, 7 and 9, two noticeable improvements are evident from the data. One is seen in Figures 5 and 7 where the SPEEK/Gel systems (both with and without the PWA additive) show marked improvement over Nafion™ at temperatures of 80°C, 100°C and 120°C. The second improvement is noticeable in Figure 9 where the SPEEK/Gel/Imidazole system shows improved performance as temperature increases approaching that of the performance of Nafion™ at 120°C.

### Membranes Made from Epoxy Polymer and Nitrogen-Containing Compound

In another embodiment of the invention, the polymer electrolyte membrane is made from a combination of an epoxy-containing polymer and a nitrogen-containing compound. The membranes are usually low cost and typically outperform Nafion™ membranes at high temperatures (e.g., above about 110°C). Any suitable epoxy-containing polymer can be used to make the membrane. Preferably, the epoxy-containing polymer is an aromatic epoxy resin. Any suitable nitrogen-containing compound can be used to make the membrane. Preferably, the nitrogen-containing compound is imidazole or a substituted imidazole. In one embodiment, the membrane comprises from about 20% to about 95% epoxy resin and from about 5% to about 30% imidazole or substituted imidazole by weight. In many embodiments, the nitrogen-containing compound is a curing agent for the epoxy resin. Imidazole and substituted imidazoles act as curing agents, as well as increasing proton conduction. Other suitable curing agents include various diamines of primary and secondary amines.

The membrane can also optionally contain one or more additives that improve the membrane by increasing its hydratability and/or increasing its ionic conductivity, such as those described above (e.g., lignosulfonate or highly hydratable polyacids); one or more additives that aid in controlling the morphology of the membrane, such as those described above; and one or more high temperature polymers, such as sulfonated Siloxirane®. Sulfonated hydrocarbon-based polymers could also be added, such as SPEEK or SPES.

A preferred membrane according to the invention contains 55.65% Epon 813, 10.53% Admex 760, 1.04% FC4430, 17.69% imidazole (40% in N-methylpyrrolidone), 7.12% phosphotungstic acid (25% in N-methylpyrrolidone), and 7.97% Epicure 3200 (all by weight of the membrane). Epon 813 (Shell) is an epichlorhydrin bis phenol A epoxy resin modified with various heloxy resins. Admex 760 (Velsicol Chemical Corporation) is a polymeric adipate (esters of adipic acid) and functions as a plasticizer. FC4430 is a 3M product containing a fluoride and functions as a flow control agent. Epicure 3200 is an aliphatic amine curing agent. The order of addition is as listed above, and attention is given to the time frame within which one is working after the addition of the curing agent. The pot life in this case is about 2 to 3 hours depending on ambient conditions with a cure schedule of 30 minutes at 120°C. A film is drawn down with an 8 mil wet application bar, and applied to a substrate which provides for a free-standing film.

Figure 13 shows an ionic conductivity plot of the preferred epoxy membrane system. This figure displays ionic conductivity (S/cm) versus temperature (°C) in a saturated environment as compared to Nafion™. It is seen from this figure that the ionic conductivity of the epoxy membrane outperforms Nafion™ at 120°C with a potential trend towards stability at temperatures above 100°C.

### Membrane Electrode Assemblies

The present invention also relates to membrane electrode assemblies including the polymer electrolyte membranes of the invention. The membrane electrode assembly includes the polymer electrolyte membrane, a first catalyst layer positioned on a first side of the membrane, a second catalyst layer positioned on a second side of the membrane, an anode positioned outside the first catalyst layer, and a cathode positioned outside the second catalyst layer. The catalyst layers can be coated on the inside surfaces of the anode and the cathode, or on opposing sides of the membrane. The invention also relates to a fuel cell stack which comprises a plurality of membrane electrode assemblies and flow field plates between the assemblies.

### Direct Methanol Fuel Cells

The present invention also relates to direct methanol fuel cells (DMFCs) including the polymer electrolyte membranes of the invention. There is a need for a polymer electrolyte membrane that can function effectively in a DMFC, as the current membranes are deficient in preventing crossover of methanol across the membrane from anode to cathode. This limits the level of methanol that can be used as the hydrogen source to less than about 1-2 M concentration. It is estimated that a much higher concentration of methanol (in the range of 10 M) would be needed for a DMFC to have sufficient power density for use in many applications of interest. The polymer electrolyte membranes of the invention are expected to function as effective and efficient membranes in a DMFC with reduced methanol crossover.

In a preferred embodiment, the polymer electrolyte membranes are able to operate at a higher temperature (e.g., 120°-150°C) than Nafion™ membranes so that the oxidation kinetics of methanol at the anode are significantly enhanced. This results in a lower concentration of unreacted methanol in the feed, and it allows operation of a DMFC at higher methanol concentration with reduced tendency for crossover. Operating at a higher temperature is also expected to allow the use of a lower level of catalyst (platinum/ruthenium or platinum/molybdinum) with significant reduction in cost. At the higher temperature, methanol can be fed in the vapor phase; this should also decrease any crossover problems by increasing the reaction kinetics.

Preferably, the polymer used in the polymer electrolyte membrane has a glass transition temperature of at least about 100°C, and more preferably at least about 120°C, to enable the higher operating temperature. Some examples of high temperature polymers are described above.

### Examples (not according to the invention)

Polymer electrolyte membranes made with an acidic hydrocarbon-based polymer (e.g., sulfonated polyether sulfone), imidazole and additives according to the invention were synthesized and tested as follows:

Polymer Synthesis: Concentrated sulfuric acid (H₂SO₄) is placed in a boiling flask containing a magnetic stirrer bar. The flask is then placed on a magnetic stirrer. While stirring, the appropriate amount of polymer powder (e.g. polyethersulfone (PES)) is slowly added in order to produce a miscible solution with minimal conglomeration. The approximate ratio of PES:H₂SO₄ is 5g:50mL. The sulfonation solution is allowed to stir for a desired reaction time (1-96 hours) at a desired reaction temperature (23°C or 80°C). The mixture is then transferred to a separatory funnel.

Once in the separatory funnel, the solution is precipitated dropwise into a 1000 ml beaker containing deionized water (DI H₂O), which is also stirring on a magnetic stirrer plate. This precipitation procedure forms pellets of sulfonated polymer. The pellets are then washed with DI H₂O via vacuum filtration until the pH of the filtrate is ~ 5. Finally, the synthesized pellets are immersed in a glass vial filled with DI H₂O and placed on rollers for an extended period of time (4 to 24 hours). Once the pellets are removed from the rollers, they are transferred to open-faced petri dishes. These dishes are then inserted into an oven at 50-80°C for 24 hours in order to thoroughly dry the material. Additives such as salts, imidazole, and morphology control agents such as phenolics, polyimides were added to the solution before casting the membranes. Optionally, it is possible to add salt and morphology control agents such as polyimides and phenolics during the sulfonation procedure.

Membrane Processing: The dry pellets are taken from the convection oven and solvent-blended with dimethylacetamide (DMAc) or N-methylpyrrolidone (NMP), appropriate salts (e.g. Cs₂SO₄), HPA's (e.g. phosphotungstic acid), and/or imidazoles. These solutions can then be used to process membranes on glass panels with a draw-down machine. The solvent-laden membranes are placed in a vacuum oven at 50-80°C and 26" Hg for 1-4 hours to pull off the majority of the solvent. These membranes are then post-dried in an oven overnight at 50-80°C. The final films are homogeneous materials with a controlled thickness typically ranging from 1 to 20 mils (0.025 to 0.51 mm) having excellent dry and wet strengths.

Characterization: The membranes were characterized for sulfonate group by a standard titration method. The equivalent weights (EWs), which are defined as the number of grams of polymer per mole of fixed SO₃ sites, is determined for each membrane by the following method:
1. Weigh membrane to nearest 0.0001 g.
2. Place membrane in a 150-ml beaker with approximately 50 ml of DI H₂O for 5 minutes. Measure pH of water. Leaving membrane in beaker, decant the water.
3. Add approximately 50 ml of 2 M nitric acid for 30 minutes. Next, decant the nitric acid and add 50 ml of fresh nitric acid for an additional 30 minutes. Decant the nitric acid, leaving the membrane in the beaker.
4. Add approximately 50 ml of fresh DI H₂O to the beaker and allow the membrane to soak for 30 minutes. Decant the water and add approximately 50 ml of fresh DI H₂O to the beaker. Decant the water, leaving the membrane in the beaker.
5. Measure out 50 ml of 2 M NaCl in a 50-ml graduated cylinder and add to the beaker. Place the beaker on a magnetic stirrer plate on the lowest setting so that the NaCl solution is gently stirred. It may be necessary to hold the membrane against the bottom of the beaker with a stirring rod. Allow the membrane to soak in the NaCl for 60 minutes.
6. Using a 50-ml burette, titrate the NaCl solution with 0.01 M NaOH to its endpoint (pH=7).
7. Based on the volume of NaOH added to reach the endpoint, an EW can then be determined.
Present titration data has shown improvements in synthesis procedures by an order of magnitude with an approximate EW range of 1500 to 2200 g per mol SO₃H. Titration data has shown the potential to reduce EW due to additions of Cs₂SO₄ salts.

Depending on level of sulfonation , equivalent weights in the range of one sulfonate group for 1500- 3000 daltons the polymer were obtained. Sulfonate equivalents in the range of 600- 1300 can be achieved with further optimization of the polymer structure and morphology.

Data on the moisture absorption of membranes were also measured as a function of humidity. We expect absorption data to be in the 30-40 % range at low humidity.

Water Uptake: Water uptake studies can be performed to determine the absorption of water into the PEMs. Our initial test matrix uses one set temperature (40°C) to control four humidity ranges (96%, 74%, 42% and 11 %). The dry weight of four PEM replicates is recorded prior to testing. These PEMs are then placed into separate desiccator units each of which contains the necessary chemicals to produce the desired humidity levels as outlined in the following table:

| **Chemicals** | **Temperature °C** | **% Humidity** |
|---|---|---|
| Potassium Sulfate | 40 | 96 |
| Sodium Chloride | 40 | 74.7 |
| Potassium Carbonate | 40 | 42 |
| Lithium Chloride | 40 | 11 |

After a 24 hour exposure the weights of each PEM are quickly measured to determine the water uptake as a weight percent of water absorption.

Ionic Conductivity: One of the most critical parameters relating to the performance of polymer electrolyte membranes is ionic conductivity. This quantity is an expression of the inherent resistance of the membrane media to the transport of ions such as protons (H⁺). Electrochemical Impedance Spectroscopy (EIS) is a characterization technique often used to determine ionic conductivity, typically expressed in units of Siemens/cm. EIS entails the application of a modulated electrical potential through the volume of the material to be analyzed. As an experiment is carried out, the frequency of the modulated signal is systematically varied with time. The electrical potential of the applied field is constant over the course of the experiment and often ranges from 0.01 to 0.1 millivolts. The modulated electrical potential frequency range, sufficient for PEM membrane characterization, is typically between 0.1 to 60 kiloHertz. A more broad frequency range of applied electrical field may also be used ranging from 0.1 to 13 megaHertz. EIS characterization produces data, using a frequency response analyzer, on the change in electrical phase angle with applied frequency. As a result, the capacitance as well as real and imaginary impedance values may be determined. Extrapolation of an imaginary versus real impedance plot at high frequencies yields the material impedance at the real axis intercept. This value, in conjunction with the sample thickness and surface area, is used to compute the conductance. This technique has been utilized in previous studies such as J.A. Kolde et al., Proceedings of the First International Symposium on Proton Conducting Membrane Fuel Cells, The Electrochemical Society Proceedings, 95-23, 193, (1995) and by M. M. Nasef et al., J. App. Poly. Sci., 76, 11, (2000).

Evaluations of membranes in a fuel cell were conducted using a custom-made fuel cell using Nafion 117 as a control membrane material. The geometry of the cell was of traditional PEM design with a proton exchange membrane, treated at both surfaces with a 0.3 mg Pt catalyst and a porous carbon electrode. This system, known as the membrane electrode assembly (MEA) was located between a hydrogen gas source on one side and an oxygen gas source on the opposite side. The custom-made cell was implanted with heater inserts for maintaining constant temperature. Hydration of the respective gases, if desired, was achieved via bubbling fuel gases through water in an enclosed vessel. Typical experiments entailed fuel cell operation at a range of temperatures typically from 23 to 120°C. Experimental data consisted of fuel cell potential between the anode and cathode and current at a fixed electrical load value. The power output and current density was calculated from data collected over an extended period of time.

Based on the expected sulfonate equivalency in the range of 600-1000 and conductivity in the range of 0.1 or higher with further optimized films, we estimate membrane performance to show a voltage of 600-700 mV at a current density of 500-600 mA/cm².

The principle and mode of operation of this invention have been described in its preferred embodiments. However, it should be noted that this invention may be practiced otherwise than as specifically illustrated and described without departing from its scope.

## Claims

1. A polymer electrolyte membrane comprising a proton conducting hydrocarbon-based polymer membrane, the polymer having a backbone and having acidic groups on aliphatic hydrocarbon side chains attached to the backbone, said chains being of sufficient length to allow phase separation of the acidic groups to give a membrane having a phase separated morphological microstructure.

2. A polymer electrolyte membrane according to claim 1 wherein the acidic groups are sulfonate groups.

3. A polymer electrolyte membrane according to claim 1 wherein the polymer has a weight average molecular weight of at least about 20,000.

4. A polymer electrolyte membrane according to claim 2 wherein the polymer is selected from sulfonated polyether ether ketones, sulfonated polyether sulfones, sulfonated polyphenylene oxides, sulfonated lignosulfonate resins, and blends thereof.

5. A polymer electrolyte membrane according to claim 1 wherein the polymer has a glass transition temperature of at least about 100°C.

6. A polymer electrolyte membrane according to claim 1 further comprising an additive that aids in controlling the morphology of the membrane.

7. A polymer electrolyte membrane according to claim 1 further comprising an additive that improves the membrane by increasing its hydratability and/or increasing its ionic conductivity.

8. A membrane electrode assembly comprising:
a polymer electrolyte membrane as claimed in claim 1;
a first catalyst layer positioned on a first side of the membrane;
a second catalyst layer positioned on a second side of the membrane;
an anode positioned outside the first catalyst layer; and
a cathode positioned outside the second catalyst layer.

9. A membrane electrode assembly according to claim 8 wherein the assembly is a first assembly, and further comprising additional membrane electrode assemblies and flow field plates between the assemblies to make a fuel cell stack.

10. A direct methanol fuel cell comprising a polymer electrolyte membrane as claimed in claim 1 sandwiched between an anode and a cathode, and a supply of methanol fuel fed to the anode.

11. The direct methanol fuel cell as claimed in claim 10, where the proton conducting polymer membrane has a glass transition temperature of at least about 100°C.

12. A method of making a polymer electrolyte membrane as claimed in claim 2 comprising:
producing a hydrocarbon-based polymer having a backbone and having acidic groups on aliphatic hydrocarbon side chains attached to the backbone, said chains being of sufficient length to allow phase separation of the acidic groups to give a membrane having a phase separated morphological microstructure; and
forming the polymer into a proton conducting membrane adapted for use as a polymer electrolyte membrane.

13. A method according to claim 12 wherein the acidic groups are sulfonate groups.

14. A method according to claim 12 wherein the polymer is produced by adding the acidic groups to the hydrocarbon-based polymer.

15. A method according to claim 12 wherein the polymer is produced by adding the acidic groups to subunits of the hydrocarbon-based polymer prior to polymerizing the subunits to produce the polymer.

## Patentansprüche

1. Polymerelektrolytmembran, umfassend eine protonenleitende Kohlenwasserstoff-basierende Polymermembran, wobei das Polymer einen Hauptstrang hat und Säuregruppen auf aliphatischen Kohlenwasserstoff-Seitenketten hat, die an den Hauptstrang gebunden sind, wobei die Ketten ausreichend lang sind, um eine Phasentrennung der Säuregruppen zu ermöglichen, so dass eine Membran mit einer phasengetrennten morphologischen Mikrostruktur erhalten wird.

2. Polymerelektrolytmembran gemäß Anspruch 1, wobei die Säuregruppen Sulfonatgruppen sind.

3. Polymerelektrolytmembran gemäß Anspruch 1, wobei das Polymer ein Gewichtsmittel der Molekularmasse von mindestens etwa 20.000 hat.

4. Polymerelektrolytmembran gemäß Anspruch 2, wobei das Polymer ausgewählt ist aus der Gruppe sulfonierte Polyether-Etherketone, sulfonierte Polyethersulfone, sulfonierte Polyphenylenoxide, sulfonierte Lignosulfonatharze und Mischungen davon.

5. Polymerelektrolytmembran gemäß Anspruch 1, wobei das Polymer eine Glasübergangstemperatur von mindestens etwa 100°C hat.

6. Polymerelektrolytmembran gemäß Anspruch 1, zudem umfassend einen Zusatz, mit dem die Kontrolle der Morphologie der Membran unterstützt wird.

7. Polymerelektrolytmembran gemäß Anspruch 1, zudem umfassend einen Zusatz, der die Membran verbessert, indem es seine Hyrdatierbarkeit und/oder seine ionische Leitfähigkeit erhöht.

8. Membranelektrodenanordnung, umfassend
eine Polymerelektrolytmembran aus Anspruch 1;
eine erste Katalysatorschicht, die an einer ersten Seite der Membran angeordnet ist;
eine zweite Katalysatorschicht, die an einer zweiten Seite der Membran angeordnet ist;
eine Anode, die außerhalb der ersten Katalysatorschicht angeordnet ist;
eine Kathode, die außerhalb der zweiten Katalysatorschicht angeordnet ist.

9. Membranelektrodenanordnung gemäß Anspruch 8, wobei die Anordnung eine erste Anordnung ist und zudem umfasst weitere Membranelektrodenanordnungen und Strömungsfeldplatten zwischen den Anordnungen, so dass ein Brennstoffzellenstapel gebildet wird.

10. Direktmethanol-Brennstoffzelle, umfassend eine Polymerelektrolytmembran aus Anspruch 1, eingelegt zwischen einer Anode und einer Kathode, und eine Versorgung mit Methanolbrennstoff, die an die Anode geliefert wird.

11. Direktmethanol-Brennstoffzelle gemäß Anspruch 10, wobei die protonenleitende Polymermembran eine Glasübergangstemperatur von mindestens etwa 100°C hat.

12. Herstellungsverfahren für eine Polymerelektrolytmembran aus Anspruch 2, umfassend
Herstellen eines Kohlenwasserstoff-basierenden Polymers mit einem Hauptstrang und Säuregruppen auf aliphatischen Kohlenwasserstoff-Seitenketten, die an den Hauptstrang gebunden sind, wobei die Seitenketten ausreichend lang sind, um eine Phasentrennung der Säuregruppen zu ermöglichen, so dass eine Membran mit einer phasengetrennten morphologischen Mikrostruktur erhalten wird; und
Ausbilden des Polymers als protonenleitende Membran, ausgelegt zur Verwendung als Polymerelektrolytmembran.

13. Verfahren gemäß Anspruch 12, wobei die Säuregruppen Sulfonatgruppen sind.

14. Verfahren gemäß Anspruch 12, wobei das Polymer erhalten wird durch Zusatz der Säuregruppen zu dem Kohlenwasserstoff-basierenden Polymer.

15. Verfahren gemäß Anspruch 12, wobei das Polymer erhalten wird durch Zusatz der Säuregruppen zu Untereinheiten des Kohlenwasserstoff-basierenden Polymers vor der Polymerisation der Untereinheiten zur Herstellung des Polymers.

## Revendications

1. Membrane électrolytique polymère comprenant une membrane polymère à base hydrocarbonée conductrice de protons, le polymère ayant un squelette et ayant des groupes acides sur des chaînes latérales hydrocarbonées aliphatiques fixées au squelette, lesdites chaînes ayant une longueur suffisante pour permettre la séparation de phase des groupes acides afin d'obtenir une membrane ayant une microstructure morphologique à séparation de phase.

2. Membrane électrolytique polymère suivant la revendication 1, dans laquelle les groupes acides sont des groupes sulfonate.

3. Membrane électrolytique polymère suivant la revendication 1, dans laquelle le polymère a une moyenne en poids du poids moléculaire d'au moins environ 20 000.

4. Membrane électrolytique polymère suivant la revendication 2, dans laquelle le polymère est choisi entre des polyétheréthercétones sulfonées, des polyéthersulfones sulfonées, des poly(oxydes de phénylène) sulfonés, des résines de lignosulfonate sulfonées et leurs mélanges.

5. Membrane électrolytique polymère suivant la revendication 1, dans laquelle le polymère a une température de transition vitreuse d'au moins environ 100°C.

6. Membrane électrolytique polymère suivant la revendication 1, comprenant en outre un additif qui facilite l'ajustement de la morphologie de la membrane.

7. Membrane électrolytique polymère suivant la revendication 1, comprenant en outre un additif qui améliore la membrane en augmentant sa capacité d'hydratation et/ou en augmentant sa conductivité ionique.

8. Assemblage membrane-électrodes, comprenant :
une membrane électrolytique polymère suivant la revendication 1 ;
une première couche de catalyseur positionnée sur une première face de la membrane ;
une seconde couche de catalyseur positionnée sur une seconde face de la membrane ;
une anode positionnée à l'extérieur de la première couche de catalyseur ; et
une cathode positionnée à l'extérieur de la seconde couche de catalyseur.

9. Assemblage membrane-électrodes suivant la revendication 8, ledit assemblage étant constitué d'un premier assemblage et comprenant en outre des assemblages membrane-électrodes supplémentaires et des plaques à champ de flux entre les assemblages pour produire un empilement servant de pile à combustible.

10. Pile à combustible au méthanol directe comprenant une membrane électrolytique polymère suivant la revendication 1 intercalée entre une anode et une cathode, et une source de combustible consistant en méthanol amené à l'anode.

11. Pile à combustible au méthanol directe suivant la revendication 10, dans laquelle la membrane polymère conductrice a une température de transition vitreuse d'au moins environ 100°C.

12. Procédé pour la production d'une membrane électrolytique polymère suivant la revendication 1, comprenant :
la formation d'un polymère à base hydrocarbonée ayant un squelette ayant des groupes acides sur des chaînes latérales hydrocarbonées aliphatiques fixées au squelette, lesdites chaînes ayant une longueur suffisante pour permettre une séparation de phase des groupes acides afin d'obtenir une membrane ayant une microstructure morphologique à séparation de phase ; et
la transformation du polymère en une membrane conductrice de protons adaptée à l'utilisation comme membrane électrolytique polymère.

13. Procédé suivant la revendication 12, dans lequel les groupes acides sont des groupes sulfonate.

14. Procédé suivant la revendication 12, dans lequel le polymère est produit en ajoutant les groupes acides au polymère à base hydrocarbonée.

15. Procédé suivant la revendication 12, dans lequel le polymère est produit en ajoutant les groupes acides à des sous-unités du polymère à base hydrocarbonée avant polymérisation des sous-unités pour produire le polymère.
